# EUROPEAN PATENT APPLICATION

(11) **EP 0 947 541 A1**
(43) Date of publication of application: **06.10.1999**
(21) Application number: 98950320.6
(22) Date of filing: 21.10.1998
(51) Int. Cl.: C08J 3/24, C08L 23/16

(54) **THERMOPLASTIC ELASTOMER**

(30) Priority: 22.10.1997 JP 28977497
(71) Applicant: MITSUBISHI CHEMICAL CORPORATION, Chiyoda-ku, Tokyo 100-0005 (JP); TOYOTA JIDOSHA KABUSHIKI KAISHA, Aichi-ken 471-8571 (JP); Kyowa Leather Cloth Co., Ltd., Hamamatsu-shi, Shizuoka 430-0822 (JP)
(72) Inventor: MAYUMI, Junji, Yokkaichi Plant, Yokkaichi-shi, Mie 510-8530 (JP); OZU, Takahiro, Yokkaichi Plant, Yokkaichi-shi, Mie 510-85308530 (JP); KONNO, Tetsuo, Yokkaichi Plant, Yokkaichi-shi, Mie 510-85308530 (JP); SHIBATOU, Keisuke, Yokkaichi Plant, Yokkaichi-shi, Mie 510-8530 (JP); OOI, Shigekazu, Yokkaichi Plant, Yokkaichi-shi, Mie 510-8530 (JP); KAKO, Chika, Toyota Jidosha Kabushiki Kaisha, Toyota-shi, Aichi 471-8571 (JP); NOMURA, Takao, Toyota Jidosha Kabushiki Kaisha, Toyota-shi, Aichi 471-8571 (JP); NISHIMURA, Hideo, Toyota Jidosha Kabushiki Kaisha, Toyota-shi, Aichi 471-8571 (JP); UKAI, Junzo, Toyota Jidosha Kabushiki Kaisha, Toyota-shi, Aichi 471-8571 (JP); NAKAMURA, Naoyoshi, Kyowa Leather Cloth Co., Ltd., Hamamatsu-shi, Shizuoka 430-08 22 (JP); YAMAMOTO, Yuji, Kyowa Leather Cloth Co., Ltd., Hamamatsu-shi, Shizuoka 430-0822 (JP); HORIE, Takashi, Kyowa Leather Cloth Co., Ltd., Hamamatsu-shi, Shizuoka 430-0822 (JP)
(74) Representative: HOFFMANN - EITLE
(86) International application number: JP9804761
(87) International publication number: WO9920681

(57) **Abstract**

A polyolefin thermoplastic elastomer is provided which is excellent in oil resistance as well as in sheet formability, thermoformability, resistance to low temperature embrittlement and other properties.

The thermoplastic elastomer comprises a crosslinked product obtained by dynamic heat treatment, in the presence of an organic peroxide, of a composition comprising: (A) 10 to 80% by weight of a crystalline propylene polymer resin; (B) 50 to 10% by weight of a copolymer of ethylene with a polar group-containing vinyl monomer; (C) 50 to 10% by weight of a copolymer rubber comprising (C1) 5 to 100% by weight of a propylene/α-olefin copolymer rubber having a propylene content of 65 to 90% by weight and (C2) 95 to 0% by weight of an olefin copolymer rubber having a propylene content of 15 to 60% by weight, the total of the components (A), (B) and (C) being 100% by weight; and optionally (D) 50 to 400 parts by weight, based on 100 parts by weight of the component (C), of a rubber softener.

## Description

### TECHNICAL FIELD

The present invention relates to a polyolefin thermoplastic elastomer, and more particularly to a polyolefin thermoplastic elastomer which is excellent in oil resistance as well as in sheet formability, thermoformability, resistance to low temperature embrittlement and other properties.

### BACKGROUND ART

Sheets comprising polyvinyl chloride as a main material have hitherto been used as skins of automobile interior parts, such as instrument panels and door trims. In recent years, however, polyolefin thermoplastic elastomers have drawn attention and have begun to be put to practical use from the viewpoint of demands for a reduction in weight of automobile parts and demands associated with environmental problems, such as those for recycling and easy incineration.

Conventional polyolefin thermoplastic elastomers, however, are likely to absorb mineral oils, fats and oils and the like, and, hence, when used as automobile interior parts, are considered unsatisfactory in oil resistance.

On the other hand, as an alternative to the conventional polyolefin thermoplastic elastomers comprising a crosslinked product obtained by dynamic heat treatment, in the presence of an organic peroxide, of a composition comprising a crystalline propylene polymer resin and an olefin copolymer rubber and optionally a rubber softener, a polyolefin thermoplastic elastomer comprising a crosslinked product obtained by heat treatment of a composition comprising a crystalline propylene polymer resin and a copolymer of ethylene with an acrylic ester or a methacrylic ester in the same manner as mentioned above has been proposed as a material having improved oil resistance (see Japanese Patent Laid-Open Publication No. 149964/1995).

According to studies conducted by the present inventors, this polyolefin thermoplastic elastomer certainly has improved oil resistance. On the other hand, however, the problem with this elastomer is that the sheet formability, thermoformability, and resistance to low temperature embrittlement possessed by the conventional polyolefin thermoplastic elastomer deteriorates.

### DISCLOSURE OF THE INVENTION

In view of the above prior art techniques, it is an object of the present invention to provide a polyolefin thermoplastic elastomer that possesses improved oil resistance while enjoying excellent properties inherent in the conventional polyolefin thermoplastic elastomer, that is, excellent sheet formability, thermoformability, and resistance to low temperature embrittlement.

The above object of the present invention can be attained by a thermoplastic elastomer comprising a crosslinked product obtainable by dynamic heat treatment, in the presence of an organic peroxide, of a composition comprising: (A) 10 to 80% by weight of a crystalline propylene polymer resin; (B) 50 to 10% by weight of a copolymer of ethylene with a polar group-containing vinyl monomer; (C) 50 to 10% by weight of a copolymer rubber comprising (C1) 5 to 100% by weight of a propylene/α-olefin copolymer rubber having a propylene content of 65 to 90% by weight and (C2) 95 to 0% by weight of an olefin copolymer rubber having a propylene content of 15 to 60% by weight, the total of the components (A), (B) and (C) being 100% by weight; and optionally (D) 50 to 400 parts by weight, based on 100 parts by weight of the component (C), of a rubber softener.

### BEST MODE FOR CARRYING OUT THE INVENTION

Specific examples of crystalline propylene polymer resins usable as the component (A) according to the present invention include a propylene homopolymer, a propylene/α-olefin random copolymer of not less than 90% by weight of propylene with not more than 10% by weight of other α-olefin, such as ethylene, butene-1, or hexene-1, and a propylene/α-olefin block copolymer, of not less than 70% by weight of propylene with not more than 30% by weight of other α-olefin, comprising 50 to 95% by weight of a propylene homopolymer block and 5 to 50% by weight of a propylene/α-olefin copolymer block.

For these crystalline propylene polymer resins, the degree of crystallization is preferably not less than 35%, more preferably 40 to 80%, as measured by X-ray diffractometry from the viewpoint of oil resistance.

The melt flow rate (MFR) is preferably 0.01 to 100 g/10 min, more preferably 0.1 to 80 g/10 min, particularly preferably 0.1 to 20 g/10 min, as measured under conditions of temperature 230°C and load 2.16 kg according to ASTM D 1238.

Two or more of the crystalline propylene polymer resins can be used in combination as the component (A).

Specific examples of preferred polar groups of the polar group-containing vinyl monomer in the copolymer of ethylene with the polar group-containing vinyl monomer usable as the component (B) according to the present invention include carbonyl, carboxylic acid, carboxylic anhydride, ester, hydroxyl, nitrile, amido, amino, imino, and imido groups. Among them, the ester group is preferred from the viewpoint of copolymerizability with ethylene.

Specific examples of particularly preferred polar group-containing vinyl monomers usable herein include vinyl acetate, acrylic esters, and methacrylic esters (which are alcohol esters having 1 to 12 carbon atoms). Specific examples of copolymers usable herein include ethylene/vinyl acetate copolymer, ethylene/methyl acrylate copolymer, ethylene/methyl methacrylate copolymer, ethylene/ethyl acrylate copolymer, ethylene/ethyl methacrylate copolymer, ethylene/butyl acrylate copolymer, ethylene/butyl methacrylate copolymer, ethylene/2-ethylhexyl acrylate copolymer, and ethylene/2-ethylhexyl methacrylate copolymer. These copolymers may contain as the comonomer component a minor amount of other α-olefin, such as propylene, two or more polar group-containing vinyl monomers or the like.

The content of the polar group-containing vinyl monomer unit in the copolymer of ethylene with the polar group-containing vinyl monomer is preferably 15 to 60% by weight, more preferably 15 to 50% by weight, particularly preferably 15 to 35% by weight. When the content of the polar group-containing vinyl monomer unit is smaller than the above lower limit, the effect of improving the oil resistance as the thermoplastic elastomer is unsatisfactory, while the content is larger than the above upper limit, the resistance to low temperature embrittlement and the mechanical strength are sacrificed.

For these copolymers, the density is preferably 0.90 to 0.96 g/cm³, particularly preferably 0.92 to 0.95 g/cm³, and the melt flow rate (MFR) is preferably 0.1 to 100 g/10 min, particularly preferably 0.2 to 50 g/10 min, as measured under conditions of temperature 190°C and load 2.16 kg according to ASTM D 1238.

Two or more of the copolymers of ethylene with the polar group-containing vinyl monomers may be used as the component (B) according to the present invention.

The copolymer rubber used as the component (C) according to the present invention is an olefin copolymer rubber containing 5 to 100% by weight of a propylene/α-olefin copolymer rubber (C1) having a propylene content of 65 to 90% by weight.

This propylene/α-olefin copolymer rubber (C1), by virtue of its high propylene content, has high affinity for the crystalline propylene polymer resin as the component (A) and can improve even ductility and malleability and emboss retention in the thermoforming.

Specific examples of the propylene/α-olefin copolymer rubber (C1) include copolymer rubbers comprising propylene as a main component and α-olefins other than propylene, such as ethylene, butene-1, and hexene-1. Among them, a propylene/ethylene copolymer rubber is preferred.

The content of propylene in the propylene/α-olefin copolymer rubber (C1) is 65 to 90% by weight, preferably 66 to 86% by weight. When the propylene content is smaller than the above lower limit, the even ductility and malleability and emboss retention in the thermoforming are unsatisfactory, while when the propylene content is larger than the above upper limit, the rubber-like properties are lost.

Further, the Mooney viscosity ML₁₊₄ (100°C) as measured according to ASTM D 1646 is preferably 10 to 200, more preferably 20 to 150.

The content of the propylene/α-olefin copolymer rubber (C1) in the component (C) is 5 to 100% by weight, preferably 10 to 90% by weight, more preferably 10 to 70% by weight. When the content of the propylene/α-olefin copolymer rubber (C1) is smaller than the above lower limit, the effect of improving the even ductility and malleability and emboss retention in the thermoforming are unsatisfactory.

According to the present invention, in addition to the indispensable rubber component (C1), an olefin copolymer rubber (C2) having a propylene content of 15 to 60% by weight may be used. Specific examples of the component (C2) usable herein include copolymer rubbers comprising ethylene and α-olefins having 3 to 12 carbon atoms, such as ethylene/propylene copolymer rubber, ethylene/butene-1 copolymer rubber, ethylene/hexene-1 copolymer rubber, and ethylene/propylene/butene 1 copolymer rubber, and rubbers comprising the above components and non-conjugated dienes as additional comonomers, such as dicyclopentadiene, 5-ethylidene-2-norbornene, 1,4-hexadiene, 1,7-octadiene, 7-methyl-1,6-octadiene, and 1,9-decadiene. Among them, ethylene/propylene copolymer rubber and ethylene/propylene/non-conjugated diene copolymer rubber are preferred. Particularly preferred are ethylene/propylene/dicyclopentadiene copolymer rubber and ethylene/propylene/5-ethylidene-2-norbornene copolymer rubber.

The content of propylene in the ethylene/propylene copolymer rubber or ethylene/propylene/non-conjugated diene copolymer rubber is preferably 15 to 60% by weight, particularly preferably 20 to 55% by weight, based on the total amount of the ethylene and propylene.

The Mooney viscosity ML₁₊₄ (100 °C) of these olefin copolymer rubbers (C2) as measured according to ASTM D 1646 is preferably 10 to 500, more preferably 20 to 400.

Further, the degree of unsaturation in terms of iodine value is preferably not more than 20, more preferably not more than 18.

Two or more olefin polymer rubbers may be used in combination as the component (C2) according to the present invention.

The rubber softener as the component (D), which may be optionally used in the present invention, is generally compounded for imparting forming properties and softness to the thermoplastic elastomer and is preferably used in the present invention.

The softener for rubber is a mineral oil-based, high-boiling petroleum fraction and is generally a mixture of three components of aromatics, naphthenes, and paraffins. In this case, for the paraffins, not less than 50% of the total number of carbon atoms are accounted for by the number of carbon atoms of the paraffin chains; for the naphthenes, 30 to 40% of the total number of carbon atoms is accounted for by the number of carbon atoms of the naphthene ring; and for the aromatics, not less than 30% of the total number of carbon atoms is accounted for by the number of carbon atoms of the aromatic ring. According to the present invention, preferred are paraffins with a number average molecular weight of preferably 200 to 2000, particularly preferably 300 to 1600.

Two or more of the rubber softeners may be used in combination as the component (D) according to the present invention.

Regarding the composition ratio of the crystalline propylene polymer resin as the component (A), the copolymer of ethylene with a polar group-containing vinyl monomer as the component (B), and the olefin copolymer rubber as the component (C) constituting the composition according to the present invention, the composition comprises 10 to 80% by weight of the component (A), 50 to 10% by weight of the component (B), and 50 to 10% by weight of the component (C), preferably comprises 20 to 70% by weight of the component (A), 40 to 15% by weight of the component (B), and 40 to 10% by weight of the component (C), and particularly preferably comprises 30 to 60% by weight of the component (A), 40 to 15% by weight of the component (B), and 35 to 10% by weight of the component (C). In this case, the total of the components (A), (B), and (C) is 100% by weight.

In the composition ratio, when the amount of the component (A) is smaller than the lower limit of the above range, the formability and the mechanical strength of the thermoplastic elastomer are deteriorated. On the other hand, when the amount of the component (A) is larger than the upper limit of the above range, the hardness of the thermoplastic elastomer is so high that the soft handle is lost. Further, in this case, the thermoformability is deteriorated. When the amount of the component (B) is larger than the upper limit of the above range, the formability and the resistance to low temperature embrittlement are deteriorated, while when the amount of the component (B) is smaller than the lower limit of the above range, the effect of improving the oil resistance cannot be attained. When the amount of the component (C) is larger than the upper limit of the above range, the formability is deteriorated and, in addition, the effect of improving the oil resistance is deteriorated, while when the amount of the component (C) is smaller than the lower limit of the above range, the resistance to low temperature embrittlement and the flexibility are deteriorated.

The amount of the rubber softener (D) optionally compounded in the composition according to the present invention is 50 to 400 parts by weight, preferably 75 to 350 parts by weight, particularly preferably 100 to 300 parts by weight, based on 100 parts by weight of the component (C).

When the amount of the component (D) compounded is smaller than the above lower limit, the composition is unsatisfactory in the effect of improving the oil resistance. On the other hand, when the amount of the component (D) compounded is larger than the above upper limit, the rubber softener is unfavorably bled out.

According to the present invention, the composition is dynamically heat treated in the presence of an organic peroxide to give a crosslinked product.

The dynamic heat treatment refers to mixing and kneading of the components in a molten state by means of a kneader/mixer, such as a mixing roll, a kneader, a Banbury mixer, or an extruder, at the decomposition temperature of the organic peroxide or above. The dynamic heat treatment is generally carried out at a temperature of 150 to 350°C, preferably 160 to 300°C, for 0.2 to 30 min, preferably 0.5 to 20 min.

The dynamic heat treatment permits crosslinking to proceed in the components (B) and (C) contained in the composition to give a partially crosslinked product. According to the present invention, the degree of crosslinking based on the total amount of the components (B) and (C) contained in the composition is preferably 10 to 99%, more preferably 15 to 95%, particularly preferably 20 to 90%, in terms of insolubles after Soxhlet's extraction with boiling xylene for 10 hr. When the degree of crosslinking is smaller than the above lower limit, the thermoplastic elastomer has unsatisfactory mechanical strength and heat resistance and, in addition, has excessively high gloss.

Organic peroxides usable herein include both aliphatic and aromatic organic peroxides, and specific examples thereof include di-t-butyl peroxide, 2,5-dimethyl-2,5-di(t-butylperoxy)hexane, 2,5-dimethyl-2,5-di(t-butylperoxy)hexyne-3, 2,5-dimethyl-2,5-di(benzoylperoxy)hexane, benzoyl peroxide, t-butyl peroxybenzoate, dicumyl peroxide, t-butylcumyl peroxide, and diisopropylbenzene hydroperoxide. These organic peroxides may be used in combination of two or more.

In general, the amount of the organic peroxide used is preferably 0.01 to 10 parts by weight, particularly preferably 0.1 to 5 parts by weight, based on 100 parts by weight in total of the components (A), (B), and (C).

If necessary, the organic peroxide may be used in combination with a crosslinking assistant. Specific examples of crosslinking assistants usable herein include: acrylic or methacrylic polyfunctional compounds, such as ethylene glycol dimethacrylate, polyethylene glycol dimethacrylate, trimethylolpropane triacrylate, and trimethylolpropane trimethacrylate; divinylbenzene; and liquid polybutadiene.

The amount of the crosslinking assistant used is preferably not more than 10 parts by weight, particularly preferably 0.1 to 5 parts by weight, based on 100 parts by weight of the total amount of the components (A), (B), and (C).

According to the present invention, a copolymer of ethylene with a polar group-containing vinyl monomer as the component (E) may be optionally compounded as a diluent for the thermoplastic elastomer. The copolymer of ethylene with a polar group-containing vinyl monomer described above in connection with the component (B) may be used as the component (E). Preferred comonomers described above in connection with the component (B) may be mentioned as preferred comonomers in the component (E).

The amount of the component (E) compounded is 10 to 100 parts by weight; preferably 10 to 70 parts by weight, particularly preferably 10 to 50 parts by weight, based on 100 parts by weight of the thermoplastic elastomer. When the amount of the component (E) compounded is larger than the above upper limit, the softness is deteriorated.

According to the present invention, if necessary, various resins and rubber other than described above, fillers, such as glass fibers, talc, calcium carbonate, diatomaceous earth, and silica, various additives, such as weatherproof agents, antioxidants, antistatic agents, flame retardants, dispersants, and slip agents, and pigments, such as carbon black, may be compounded in the stage of a composition before the dynamic heat treatment or in the stage of a crosslinked product obtained by dynamic heat treatment of the composition.

According to the present invention, the rubber softener (D) may be added by any of a method wherein the rubber softener (D) may be previously compounded in the component (C), a method wherein the rubber softener (D) is compounded in the stage of the composition, and a method wherein the rubber softener (D) is compounded in the stage of the crosslinked product obtained by dynamic heat treatment of the composition.

The following examples further illustrate the present invention but are not intended to limit it unless they go beyond the subject matter of the present invention.

### Examples 1 to 4 and Comparative Examples 1 to 6

The following components (A), (B), (C), and (D) were provided. The components (A), (B), (C), and (D) were mixed together in a composition ratio shown in Table 1 in the presence of 0.5 part by weight, based on 100 parts by weight of the total amount of the components (A), (B), and (C), of 2,5-dimethyl-2,5-di(t-butylperoxy)hexane (Kayahexa AD, manufactured by Kayaku Akzo Corporation) as an organic peroxide and 1.0 part by weight, based on 100 parts by weight of the total amount of the components (A), (B), and (C), of divinylbenzene (manufactured by Sankyo Chemical Industry Ltd.) as a crosslinking assistant by means of a Henschel mixer. The mixtures were then melt kneaded by means of a twin screw extruder (TEX 30, manufactured by The Japan Steel Works, Ltd.) under conditions of 200°C, 230 rpm, and 40 sec. Thus, polyolefin thermoplastic elastomers were produced.

### Example 5

The component (E) was added in a proportion indicated in Table 2 to the thermoplastic elastomer of Example 3, followed by kneading by means of the same twin screw extruder to produce a thermoplastic elastomer composition.
Component (A): a propylene homopolymer (PP) having a degree of crystallization of 60% and an MFR of 0.7 g/10 min at 230°C.
Component (B): an ethylene/vinyl acetate copolymer (EVA ①) having a vinyl acetate unit content of 28% by weight, a density of 0.941 g/cm³, an MFR of 6.0 g/10 min at 190°C, and a melting termination temperature of 71°C as measured by DSC;
   an ethylene/vinyl acetate copolymer (EVA②) having a vinyl acetate unit content of 11% by weight, a density of 0.926 g/cm³, an MFR of 3.5 g/10 min at 190°C, and a melting termination temperature of 89°C as measured by DSC;
   an ethylene/methyl acrylate copolymer (EMA①) having a methyl acrylate unit content of 20% by weight, a density of 0.935 g/cm³, an MFR of 6.0 g/10 min at 190°C, and a melting termination temperature of 87°C as measured by DSC; and
   an ethylene/methyl acrylate copolymer (EMA②) having a methyl acrylate unit content of 53% by weight, a density of 0.957 g/cm³, and an MFR of 3.0 g/10 min at 190°C.
Component (C):
   Component (C1): an ethylene/propylene copolymer rubber (EPM) having a propylene content of 70% by weight and a Mooney viscosity ML₁₊₄ (100°C) of 70.
   Component (C2): an ethylene/propylene/5-ethylidene-2-norbornene copolymer rubber (EPDM) having a propylene content of 28% by weight, a Mooney viscosity ML₁+₄ (100°C) of 287 (which is a value converted from the measured value 92 on a compound of 75 parts by weight of a paraffin softener, for rubber, compounded in 100 parts by weight of the rubber), and an iodine value of 15.
Component (D): a paraffin softener for rubber having a number average molecular weight of 746 and a ring content of 0% (Diana Process Oil PW380, manufactured by Idemitsu Kosan Co., Ltd.).
Component (E): an ethylene/methyl acrylate copolymer (EMA①) having a methyl acrylate unit content of 20% by weight, a density of 0.935 g/cm³, an MFR of 6.0g/10 min at 190°C, and a melting termination temperature of 87°C as measured by DSC.

Pellets of the thermoplastic elastomers or thermoplastic elastomer compositions thus obtained were compression molded to a thickness of 2 mm. The molded products were subjected to a test on the resistance to low temperature embrittlement by impact according to JIS K 7216. The resistance to low temperature embrittlement was evaluated as "○" when brittle fracture did not occur at -30°C, and as "X" when brittle fracture occurred at -30°C.

The surface hardness (type A) was measured according to JIS K 6301. Further, the softness was evaluated as "○" when the sample has soft handle, and as "X" when the softness is unsatisfactory.

Further, the thermoplastic elastomers or thermoplastic elastomer compositions thus obtained were extruded at 220°C through an extruder, provided with a coathunger T die and a full flighted screw, having a screw diameter of 45 mm and a compression ratio L/D of 28 (manufactured by Musashino Kikai Co., Ltd.) into sheets. The sheets were then passed through between an embossing roll (30°C) and a pressure roll, whereby one side of the sheets was embossed to an average emboss depth of 100 µm while a polypropylene resin foamed sheet (PPAM25020, manufactured by Toray Industries, Inc.) was laminated onto the other side of the sheets at a take off rate of 2 m/min. Thereafter, polypropylene was extrusion laminated onto the surface of the foamed sheet. Thus, laminated sheets having a three-layer structure with a thermoplastic elastomer layer thickness of 0.35 mm were produced.

In this case, the sheet formability of the thermoplastic elastomers was examined. The sheet formability was evaluated as "○" when the sample was ductile and maleable and had good sheet formability, and as "X" when the sample had poor sheet formability due to the non-ductile/non-malleable nature and for other reasons.

The laminated sheets having a three-layer structure were heated with an infrared heater to a surface temperature of 100 to 130°C, and then subjected to drape forming by means of a vacuum forming machine (manufactured by Asano Kenkyusho) provided with a male die having a quadrangular pyramid (bottom area 130 cm², top area 40 cm², height 5.5 cm) to produce thermoformed articles.

The thermoformed articles thus obtained were inspected, and the thermoformability was evaluated as "○" when there was no broken portion in the thermoplastic elastomer layer, and as "X" when the thermoplastic layer had a broken portion(s).

For the thermoformed articles, the emboss depth in the upper surface of the quadrangular pyramid was measured with a surface roughness tester (Surfcom 570A, manufactured by Tokyo Seimitsu Co., Ltd.), and the proportion of the ten-point average roughness after thermoforming to the ten-point average roughness before thermoforming was determined as Rz retention (%). The emboss retention was evaluated as "○" when the Rz retention was not less than 40%, and as "X" when the Rz retention was less than 40%.

The upper surface of the quadrangular pyramid in the thermoformed articles was taken off, and then immersed in a JIS No. 3 oil at 100°C for 22 hr according to JIS K 6301. The change in appearance was then inspected and evaluated as "○" when the creation of tackiness, deformation or other unfavorable phenomenon was not observed on the surface of the thermoplastic elastomer layer, as "△" when the degree of tackiness, deformation or other unfavorable phenomenon was slight, and as " X " when the creation of tackiness or other unfavorable phenomenon was significant.

Further, the elastomer layer was removed from the upper surface of the quadrangular pyramid in the thermoformed articles, and the same immersion test as described above was then carried out to measure a change in weight.

The results of evaluation on the resistance to low temperature embrittlement, the hardness, the softness, the sheet formability, the thermoformability, and the oil resistance in terms of a change in appearance and an increase in weight are summarized in Tables 1 and 2.

**Table 1**

| | | Example | | | | Comparative Example | | | | | |
|---|---|---|---|---|---|---|---|---|---|---|---|
| | | 1 | 2 | 3 | 4 | 1 | 2 | 3 | 4 | 5 | 6 |
| Formulation of composition | | | | | | | | | | | |
| Component (A), wt% | | | | | | | | | | | |
| PP | | 44 | 44 | 44 | 44 | 43 | 64 | 46 | 50 | 52 | 30 |

| Component (B), wt% | | | | | | | | | | | |
|---|---|---|---|---|---|---|---|---|---|---|---|
| EVA① | | 22 | 33 | | | | | | 50 | 42 | |
| EVA② | | | | | 33 | | | | | | |
| EMA① | | | | 33 | | | | 34 | | | |
| EMA② | | | | | | | | | | | 70 |

| Component (C), wt% | | | | | | | | | | | |
|---|---|---|---|---|---|---|---|---|---|---|---|
| Component (C1) EPM | | 22 | 11 | 11 | 11 | | | | | | |
| Component (C2) EPDM | | 12 | 12 | 12 | 12 | 57 | 36 | 20 | | | |

| Component (D), pts.wt.* | | | | | | | | | | | |
|---|---|---|---|---|---|---|---|---|---|---|---|
| Paraffin softener | | 91 | 110 | 110 | 110 | 75 | 75 | 75 | | 953 | |

| Properties of thermoplastic elastomer | | | | | | | | | | | |
|---|---|---|---|---|---|---|---|---|---|---|---|
| Resistance to low temp. embrittlement | | ○ | ○ | ○ | ○ | ○ | ○ | ○ | X | X | X |
| Hardness | | 86 | 92 | 92 | 93 | 88 | 96 | 95 | 98 | 87 | 88 |
| Softness | | ○ | ○ | ○ | ○ | ○ | X | X | X | ○ | ○ |
| Sheet formability | | ○ | ○ | ○ | ○ | ○ | ○ | ○ | X | X | X |
| Thermoformability: | ductility/malleability | ○ | ○ | ○ | ○ | X | X | ○ | -** | -** | -** |
| | Emboss retention | ○ | ○ | ○ | ○ | ○ | ○ | X | | | |
| Oil resistance: | Change in appearance | ○ | ○ | ○ | △ | X | X | ○ | - | - | - |
| | Weight increase, % | 95 | 97 | 98 | 94 | 110 | 72 | 105 | - | - | - |

| | | | | | | | | | | | |
|---|---|---|---|---|---|---|---|---|---|---|---|
| *: Total of the amount of previously compounded in EPDM (75 parts by weight) and the amount of the additionally compounded softener | | | | | | | | | | | |
| **: Unevaluable | | | | | | | | | | | |

**Table 2**

| | | Ex. |
|---|---|---|
| | | 5 |
| Formulation of thermoplastic elastomer composition | | |
| Thermoplastic elastomer component of Ex.3, pts.wt. | | 100 |
| Component (E) EMA①, pts.wt. | | 25 |

| Properties of composition and formed article | | |
|---|---|---|
| Resistance to low temp. embrittlement | | ○ |
| Hardness | | 93 |
| Softness | | ○ |
| Sheet formability | | ○ |
| Thermoformability: | Ductility/malleability | ○ |
| | Emboss retention | ○ |
| Oil resistance: | Change in appearance | ○ |
| | Increase in weight, % | 105 |

### INDUSTRIAL APPLICABILITY

The present invention can provide a polyolefin thermoplastic elastomer that is excellent in oil resistance as well as in sheet formability, thermoformability, resistance to low temperature embrittlement and other properties and hence is suitable as skin materials of automobile interior parts, for example, instrument panels, door trims, console boxes, ceiling material sheets, and handle pads, leather sheets for chairs, skin materials for bags and the like.

## Claims

1. A thermoplastic elastomer comprising a crosslinked product obtainable by dynamic heat treatment, in the presence of an organic peroxide, of a composition comprising: (A) 10 to 80% by weight of a crystalline propylene polymer resin; (B) 50 to 10% by weight of a copolymer of ethylene with a polar group-containing vinyl monomer; and (C) 50 to 10% by weight of a copolymer rubber comprising (C1) 5 to 100% by weight of a propylene/α-olefin copolymer rubber having a propylene content of 65 to 90% by weight and (C2) 95 to 0% by weight of an olefin copolymer rubber having a propylene content of 15 to 60% by weight, the total of the components (A), (B) and (C) being 100% by weight.

2. A thermoplastic elastomer comprising a crosslinked product obtainable by dynamic heat treatment, in the presence of an organic peroxide, of a composition comprising: (A) 10 to 80% by weight of a crystalline propylene polymer resin; (B) 50 to 10% by weight of a copolymer of ethylene with a polar group-containing vinyl monomer; (C) 50 to 10% by weight of a copolymer rubber comprising (C1) 5 to 100% by weight of a propylene/α-olefin copolymer rubber having a propylene content of 65 to 90% by weight and (C2) 95 to 0% by weight of an olefin copolymer rubber having a propylene content of 15 to 60% by weight, the total of the components (A), (B) and (C) being 100% by weight; and (D) 50 to 400 parts by weight, based on 100 parts by weight of the component (C), of a rubber softener.

3. The thermoplastic elastomer according to claim 1 or 2, wherein the polar group-containing vinyl monomer in the copolymer (B) is at least one member selected from the group consisting of vinyl acetate, an acrylic ester, and a methacrylic ester.

4. The thermoplastic elastomer according to any one of claims 1 to 3, wherein the content of polar group-containing vinyl monomer units in the copolymer (B) is 15 to 60% by weight based on the copolymer.

5. The thermoplastic elastomer according to any one of claims 1 to 3, wherein the content of polar group-containing vinyl monomer units in the copolymer (B) is 15 to 35% by weight based on the copolymer.

6. A thermoplastic elastomer composition characterized by comprising: 100 parts by weight of the thermoplastic elastomer according to any one of claims 1 to 5; and, compounded with said thermoplastic elastomer, (E) 10 to 100 parts by weight of a copolymer of ethylene with a polar group-containing vinyl monomer.
